# EUROPEAN PATENT APPLICATION

(11) **EP 3 474 125 A1**
(43) Date of publication of application: **24.04.2019**
(21) Application number: 17197738.2
(22) Date of filing: 23.10.2017
(51) Int. Cl.: G06F 3/0481, G06F 3/0484, G06F 3/0346, G06F 3/0488

(54) **MEDICAL IMAGE VISUALIZATION**

(71) Applicant: Koninklijke Philips N.V., 5656 AE Eindhoven (NL)
(72) Inventor: PETERS, Jochen, 5656 AE Eindhoven (NL); WEBER, Frank Michael, 5656 AE Eindhoven (NL); EWALD, Arne, 5656 AE Eindhoven (NL); WISSEL, Tobias, 5656 AE Eindhoven (NL); SCHMIDT-RICHBERG, Alexander, 5656 AE Eindhoven (NL)
(74) Representative: de Haan, Poul Erik

(57) **Abstract**

A portable computing device (50) is disclosed comprising an input module (53), a display screen (70), a set (60) of orientation sensors and a processor arrangement (51) communicatively coupled to the input module and the set of orientation sensors. The processor arrangement is adapted to receive (103) a 3-D image volume (10) from the input module; determine (105) a 2-D viewing axis (20) within the received 3-D image volume; receive (107) first data from the set of orientation sensors indicative of a rotation of the portable computing device; rotate the 2-D viewing axis within the received 3-D image volume in accordance with the indicated rotation of the portable computing device and select a 2-D image slice (30) along the rotated 2-D viewing axis; receive (113) second data from the set of orientation sensors indicative of a translation of the portable computing device; select (115) a 2-D image slice (30) from the received 3-D image volume along the 2-D viewing axis in accordance with the indicated translation of the portable computing device; and control (117) the display screen to display the 2-D image slice selected in accordance with the indicated rotation and/or translation of the portable computing device. Also disclosed is a computer program product for such a portable computing device (50).

## Description

### FIELD OF THE INVENTION

The present invention relates to a portable computing device comprising an input module, a display screen, a set of orientation sensors and a processor arrangement communicatively coupled to the input module and the set of orientation sensors, wherein the processor arrangement is adapted to receive a 3-D image volume from the input module and display a 2-D image slice from the received 3-D image volume.

The present invention further relates to a computer program product for such a portable computing device.

### BACKGROUND OF THE INVENTION

Medical images for diagnostic evaluation such as diagnostic measurements are often acquired as 3-D images but have to be displayed in a 2-D fashion. Examples of such 3-D medical images include computerized tomography (CT), magnetic resonance imaging (MRI) and ultrasound (US) image volumes that follow a standard orientation during their acquisition. For example, MRI image volumes often use scan planning.

In order to generate a 2-D volume slice for display on a display device, the orientation of the display device can be normalized relative to default anatomical views of the image volume. For example, 2-D volume slices of cardiac scans are often displayed in short-axis or 2- or 4-chamber views. However, such a standardized 2-D viewing axis within a 3-D image volume may not always yield the best viewing angle for diagnostic evaluations, in which case a medical professional trying to interpret the 3-D image volume based on the displayed 2-D volume slice may manually reorient the 2-D viewing axis within the 3-D image volume along which the 2-D image volume slices are being generated.

To this end, the medical practitioner may have access to dedicated workstations onto which the 2-D volume slices are displayed, which typically provide a rich user interface that allows the medical practitioner to reorient the 2-D viewing axis within the 3-D image volume, for example by some mouse interaction with the 3-D image volume such as clicking landmarks, drawing lines, or dragging some sliders on the display screen of the workstation.

A drawback of such workstations is that they are rather bulky, such that the medical practitioner typically has to operate the workstation in a fixed location, which is not ideal given that the medical practitioner may want to evaluate the medical image on the go, e.g. at the bedside of a patient or when travelling given the ever increasing time pressure such professionals face. In addition, the operation of such workstations can be rather involved and non-intuitive, which may hamper the medical practitioner in the evaluation of the medical images, in particular where the medical practitioner has limited experience with the operation of such workstations. Hence, there exists a need for a more intuitive interpretation of such 3-D medical imaging that can be used by a medical professional whilst on the move.

One solution has been disclosed in "Medical Imaging Specialists and 3D: A Domain Perspective on Mobile 3D interactions" by Teddy Seyed et al. in Proceedings CHI '14 Extended Abstracts on Human Factors in Computing Systems, Pages 2341-2346, Toronto Canada. This article discloses the use of a free-moving digital tablet to display reconstituted 2-D slices of a volumetric 3-D dataset, i.e. slices composed of multiple CT or MRI scan slices. Manipulation of the orientation of the digital tablet, e.g. by tilting the digital tablet, causes the manipulation of the 2-D view around a fixed center point of a 3-D volume and a user-selected orthogonal plane based on the gyroscopic and accelerometer data from the gyroscopes and accelerometers within the digital tablet generated as a result of its orientation manipulation.

Although this approach allows for the selection of 2-D image volume slices along different viewing angles, it does not allow for a straightforward selection of 2-D image volume slices along the same viewing axis, which may be desirable for example when obtaining a diagnostic measurement, e.g. a dimension of a cross-section of an organ or part thereof.

### SUMMARY OF THE INVENTION

The present invention seeks to provide a portable computing device that allows a more comprehensive selection of a 2-D image volume slice from a 3-D image volume.

The present invention further seeks to provide a computer program product for configuring a portable computing device accordingly.

According to an aspect, there is provided a portable computing device comprising an input module, a display screen, a set of orientation sensors and a processor arrangement communicatively coupled to the input module and the set of orientation sensors, wherein the processor arrangement is adapted to receive a 3-D image volume from the input module; determine a 2-D viewing axis within the received 3-D image volume; receive first data from the set of orientation sensors indicative of a rotation of the portable computing device; rotate the 2-D viewing axis within the received 3-D image volume in accordance with the indicated rotation of the portable computing device and select a 2-D image slice along said rotated 2-D viewing axis;; receive second data from the set of orientation sensors indicative of a translation of the portable computing device; select a 2-D image slice from the received 3-D image volume along the 2-D viewing axis in accordance with the indicated translation of the portable computing device; and control the display screen to display the 2-D image slice selected in accordance with the indicated rotation and/or translation of the portable computing device.

The present invention is based on the realization that a particularly intuitive user interface for evaluating 3-D medical images may be provided with a portable computing device such as a tablet computer, smart phone or the like, in which the data produced by the orientation sensors of the portable computing device that for instance may be used to determine the orientation of the portable computing device, e.g. to operate the display screen in portrait or landscape mode may be leveraged to process a 3 -D image volume in two different manners. More specifically, detected rotation of the portable computing device is used to alter the orientation of the 2-D viewing axis within the received 3-D image volume in accordance with the detected rotation, whereas detected translation of the portable computing device is used to change between 2-D image slices along the 2-D viewing axis. Consequently, a portable computing device is provided that offers straightforward selection and visualization of 2-D image slices along arbitrarily positioned 2-D viewing axes across the 3-D image volume, thereby allowing a medical practitioner to evaluate such 3-D image volumes on such a portable computing device in a highly intuitive manner.

To further enrich the user experience with such a portable computing device, the device may further comprise a first operating mode in which the processor arrangement is adapted to allow rotation of the 2-D viewing axis and a second operating mode the processor arrangement is adapted to lock the orientation of the 2-D viewing axis. In this manner, once the medical practitioner has defined the optimal 2-D viewing axis along which the medical practitioner once to visualize the 2-D image slices from the 3-D image volume, the medical practitioner can lock the 2-D viewing axis in its desired orientation by entering the second operating mode of the portable computing device, thereby preventing accidental reorientation of the 2-D viewing axis during the evaluation of the 2-D image slices due to an unintended rotation of the portable computing device.

To this end, the portable computing device typically comprises a user interface that allows its user to select the first operating mode or the second operating mode of the portable computing device. For example, the display screen may be touch-sensitive, and wherein at least one region of the display screen defines a user interface region for toggling between the first operating mode and the second operating mode such that the user can lock the orientation of the 2-D viewing axis simply by touching (or stop touching) the user interface region of the display screen in order to switch between the first operating mode and the second operating mode.

Alternatively or additionally, the user interface may be for selecting the 2-D image slice from the received 3-D image volume along the 2-D viewing axis in the second operating mode such that the user does not have to translate the portable computing device to scroll between 2-D image slices, which may yield a more intuitive selection of the 2-D image slices in the second operating mode.

In an embodiment, the display screen comprises a pair of said user interface regions at opposing edges of the display screen, said pair of user interface regions flanking a central region for displaying the 2-D image slice, and wherein the processor arrangement is adapted to select the first operating mode in response to simultaneous engagement of the pair of said user interface regions. This for instance has the advantage that the user can enter the first operating mode by simply placing both thumbs on the user interface regions when rotating, e.g. tilting, the portable computing device such that the first operating mode can be accessed in a highly intuitive manner.

Such user interface regions for example may be elongated regions, in which case the processor arrangement may be adapted to rotate the displayed 2-D image slice in accordance with simultaneously detected sliding movements in opposite directions across said elongated regions and/or select the 2-D image slice from the received 3-D image volume along the 2-D viewing axis in the second operating mode in accordance with simultaneously detected sliding movements in the same direction across said elongated regions, thereby providing an intuitive manner of invoking such in-plane rotation of the 2-D image slice.

Where the portable computing device is operated to select a particular 2-D image slice from along the 2-D viewing axis by translation of the portable computing device, such a translation may be at least one of a translation along or normal to a display axis of the display screen. For example, an upwards or downwards movement, a sideways movement or a movement in which the portable computing device is pulled towards or pushed away from the user may be used to select the particular 2-D image slice of the 3-D image volume.

Preferably, the portable computing device comprises sufficient orientation sensors such as accelerometers and/or gyroscopes to provide the processor arrangement with sufficient data from which the rotation in three-dimensional space of the portable computing device can be determined. However, in embodiments in which this is not the case, the set of orientation sensors comprises at least one camera, in which case the processor arrangement typically is adapted to at least partially determined the rotation in three-dimensional space of the portable computing device from the image data provided by the at least one camera.

Optionally, the processor arrangement is further adapted to store the displayed 2-D image slice in a data storage device in response to a user command received through a user interface of the portable computing device, which has the advantage that particularly useful 2-D image slices can be stored for evaluation at a later point in time. To this end, the portable computing device may comprise such a data storage device or may be connected to a remote data storage device such as a cloud storage device, a network attached storage device, and so on for storing the displayed 2-D image slice thereon.

As a further option, the portable computing device may further comprise an output unit communicatively coupled to the processor arrangement, wherein the processor arrangement is adapted to control the output unit to communicate orientation information of the displayed 2-D image slice to an imaging apparatus in response to a user command received through a user interface of the portable computing device. This for example is advantageous in scenarios in which image capturing in 2-D mode with such an imaging apparatus yields higher resolution images then when such image is captured in 3-D mode with such an imaging apparatus, such that the user can select a particularly interesting 2-D image slice using the portable computing device and use orientation information associated with the selected 2-D image slice to instruct an imaging apparatus to capture this 2-D image in higher resolution for further evaluation by the medical practitioner. In a preferred embodiment, the portable computing device is a tablet computer although it should be understood that embodiments of the present invention may be deployed on any suitable type of portable computing device, e.g. a smart phone or the like.

According to another aspect, there is provided a computer program product for a portable computing device comprising an input module, a display screen, a set of orientation sensors and a processor arrangement communicatively coupled to the input module and the set of orientation sensors, the computer program product comprising a computer readable storage medium having computer readable program instructions embodied therewith for, when executed on the processor arrangement, cause the processor arrangement to receive a 3-D image volume from the input module; determine a 2-D viewing axis within the received 3-D image volume; receive first data from the set of orientation sensors indicative of a rotation of the portable computing device; rotate the 2-D viewing axis within the received 3-D image volume in accordance with the indicated rotation of the portable computing device and select a 2-D image slice along the rotated 2-D viewing axis; receive second data from the set of orientation sensors indicative of a translation of the portable computing device; select a 2-D image slice from the received 3-D image volume along the 2-D viewing axis in accordance with the indicated translation of the portable computing device; and control the display screen to display the 2-D image slice selected in accordance with the indicated rotation and/or translation of the portable computing device.

Such a computer program product may be used to configure routinely available portable computing devices such that such devices can be operated in accordance with the embodiments of the present invention.

For example, the computer program product may further comprise computer readable program instructions that, when executed on the processor arrangement, cause the processor arrangement to allow rotation of the 2-D viewing axis in a first operating mode of the portable computing device and to lock the orientation of the 2-D viewing axis in a second operating mode of the portable computing device such that accidental reorientation of the 2-D viewing axis is avoided as previously explained.

As previously mentioned, where the display screen comprises a pair of said user interface regions at opposing edges of the display screen, said pair of user interface regions flanking a central region for displaying the 2-D image slice, the computer program product may further comprise computer readable program instructions that when executed on the processor arrangement cause the processor arrangement to select the first operating mode in response to simultaneous engagement of the pair of said user interface regions.

Furthermore, the computer program product may further comprise computer readable program instructions that, when executed on the processor arrangement, cause the processor arrangement to store the displayed 2-D image slice in a data storage device in response to a user command received through a user interface of the portable computing device to make such a 2-D image slice available for later evaluation as previously explained.

In addition, the computer program product may comprise computer readable program instructions that, when executed on the processor arrangement, cause the processor arrangement to control an output unit of the portable computing device to communicate orientation information of the displayed 2-D image slice to an imaging apparatus in response to a user command received through a user interface of the portable computing device in order to obtain a high resolution version of the 2-D image slice as previously explained.

### BRIEF DESCRIPTION OF THE DRAWINGS

Embodiments of the invention are described in more detail and by way of non-limiting examples with reference to the accompanying drawings, wherein:
FIG. 1 schematically depicts a volumetric (3-D) medical image;
FIG. 2 schematically depicts a sequence of 2-D image slices along a 2-D viewing axis through the volumetric medical image;
FIG. 3 schematically depicts a block diagram of a portable computing device according to an embodiment;
FIG. 4 schematically depicts a flowchart of a volumetric medical image processing method implemented by the portable computing device according to embodiments of the present invention;
FIG. 5 schematically depicts a first operating mode of such a portable computing device;
FIG. 6 schematically depicts an adjustment of a volumetric (3-D) medical image in accordance with this first operating mode;
FIG. 7 schematically depicts a second operating mode of such a portable computing device;
FIG. 8 schematically depicts the selection of a 2-D image slice from the sequence of 2-D image slices in accordance with this second operating mode; and
FIG. 9 schematically depicts an aspect of a portable computing device according to another embodiment.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

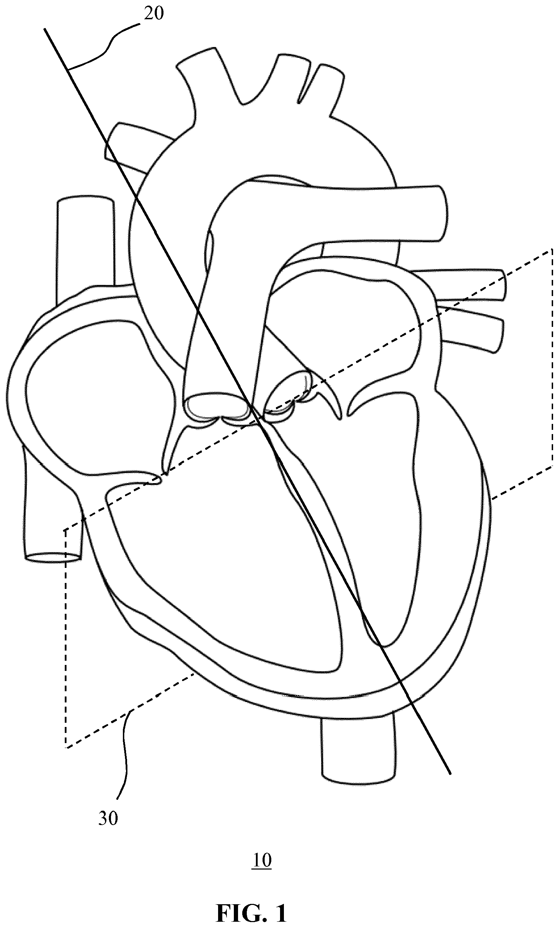

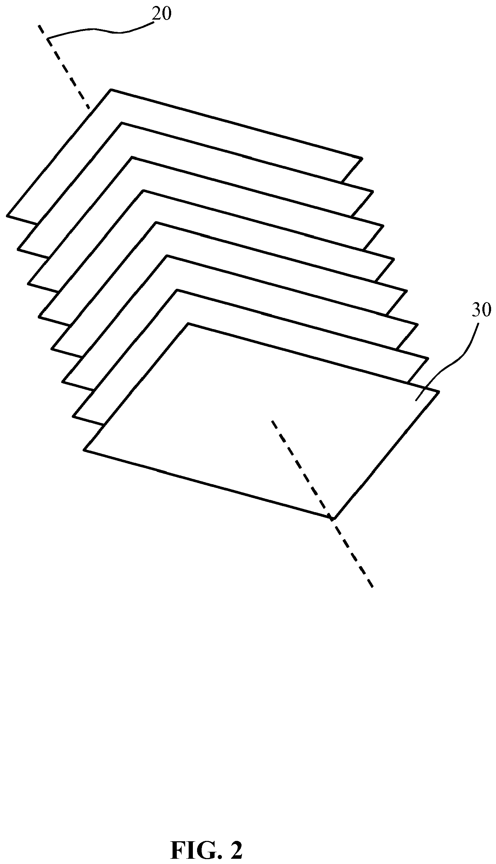

FIG. 1 schematically depicts a volumetric image 10 (also referred to as a 3-D image volume) of an anatomical portion of interest 1 captured by an imaging apparatus, here a human heart by way of non-limiting example. Such an imaging apparatus for example may be an MRI apparatus, a CT scanning apparatus, a 3-D ultrasound apparatus, and so on. However, as many display devices are incapable of generating 3-D images, and the evaluation of 3-D medical images can be rather challenging, such imaging apparatuses typically offer a 2-D viewing mode of the 3-D image volume 10 in which a 2-D image volume slice 30 is displayed for evaluation. Such a 2-D image volume slice 30 is typically generated along a 2-D viewing axis 20 through the 3-D image volume 10, with the plane of the 2-D image volume slice 30 typically being perpendicular to the 2-D viewing axis 20. Hence, by moving along the 2-D viewing axis 20, a user of the imaging apparatus can generates a plurality of 2-D image volume slices 30 as schematically depicted in FIG. 2, which for instance maybe desirable to determine a dimension of a cross-sectional view of the anatomical feature of interest as depicted in the 2-D image volume slices 30. Such a dimension, e.g. a circumference or a diameter, for example can provide diagnostically relevant information about the anatomical feature of interest, with a deviation of the dimension from a reference value (or value window) indicative of an abnormality such as disease or developmental disorder.

To this end, it is often critically important that the 2-D viewing axis 20 is correctly positioned within the 3-D image volume 10, as a suboptimal orientation of the 2-D viewing axis 20 within the 3-D image volume 10 can cause the anatomical feature of interest to be displayed suboptimally, e.g. in a distorted or incomplete manner, such that any evaluation of the anatomical feature of interest becomes hampered or even unreliable as a consequence. Many workstations of such imaging apparatuses offer a standardized 2-D view of such 3-D image volumes 10, i.e. in which the 2-D viewing axis 20 is chosen in a standardized orientation. Such a standardized orientation may be chosen in any suitable manner, such as for example following the scan direction in which the 3-D image volume 10 was generated or a normalized orientation relative to the anatomical feature of interest such as for example a short axis view, a two chamber view or a four chamber view in case of the heart being the anatomical feature of interest.

However, such standardized views do not guarantee an optimal view of the anatomical feature of interest. Often, the medical practitioner may wish to reorient the 2-D viewing axis 20 in order to improve the cross-sectional view of the anatomical feature of interest or in other words to alter the orientation of the plane of the 2-D image volume slice 30. Many workstations allow for such reformatting of the 2-D image volume slice plane using user interfaces such as a mouse, trackball and so on with which the user can reposition the 2-D viewing axis 20 by clicking on landmarks in the 3-D image volume 10, drawing lines in the 3-D image volume 10, adjusting sliders that cause a reorientation of the 2-D viewing axis 20 within the 3-D image volume 10, and so on. However, as previously mentioned, there are some notable drawbacks associated with this approach. Firstly, the user interaction required with the workstation in order to achieve the desired reorientation of the 2-D viewing axis 20 can be counterintuitive and/or cumbersome, whilst additionally the user must perform these operations at the location of the workstation due to the fact that such workstations typically are bulky and stationary.

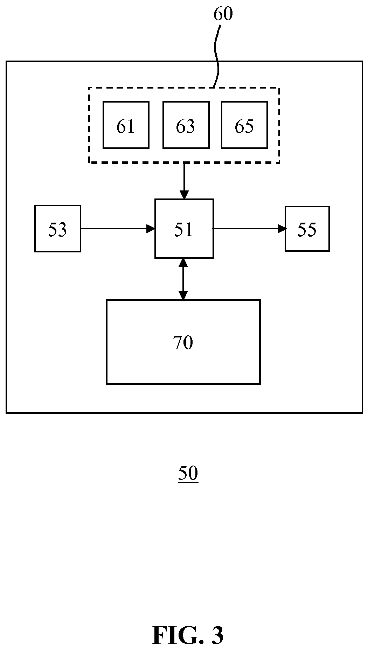

In accordance with embodiments of the present invention, there is provided a portable computing device 50 that allows for a more intuitive processing and evaluation of such a 3-D image volume 10. An example embodiment of such a portable computing device 50 is schematically depicted in FIG. 3. The portable computing device 50 according to embodiments of the present invention comprises a processor arrangement 51. The processor arrangement 51 may comprise one or more processors or processor cores that may work together to provide the computational power of the portable computing device 50.

The portable computing device 50 further comprises an input unit 53 and an output unit 55 through which the portable computing device 50 can communicate with external devices over a wired or wireless connection. In some embodiments, the input unit 53 and the output unit 55 are comprised within a single unit such as a transceiver, network card, radio or the like under control of the processor arrangement 51. Any suitable communication protocol may be used for the communication between the portable computing device 50 and such external devices, such as for example Wi-Fi, Bluetooth, TCP/IP, mobile communication protocols such as 2G, 3G, 4G, 5G and so on, proprietary communication protocols etcetera.

The portable computing device 50 further comprises a set 60 of orientation sensors communicatively coupled to the processor arrangement 51 such that the processor arrangement 51 can determine the 3-D orientation of the portable computing device 50. Such orientation sensors may include one or more accelerometers 61, one or more gyroscopes 63, one or more Hall sensors or any combination thereof. In some embodiments, the set 60 of orientation sensors further comprises one or more cameras 65, e.g. a front-facing camera and/or a back-facing camera, with the data stream provided by such cameras 65 being fed to the processor arrangement 51 in order to determine the 3-D orientation of the portable computing device 50 from the data provided by the orientation sensors 61, 63 in combination with the data provided by the one or more cameras 65. This for example may be useful in a scenario where the portable computing device 50 does not comprise a sufficient number of orientation sensors 61, 63 in order to accurately determine the 3-D orientation of the portable computing device 50 from the data provided by these sensors alone.

The portable computing device 50 further comprises a display screen 70 communicatively coupled to the processor arrangement 51, with the processor arrangement 51 being arranged to control the display screen 70. The display screen 70 preferably is a touchscreen display that can further act as a user interface of the portable computing device 50 as is well-known per se such that this will not be explained in further detail for the sake of brevity only. Any suitable type of touchscreen display technology may be used for this purpose. Alternatively or additionally, the portable computing device 50 may comprise a separate user interface (not shown), such as one or more buttons arranged around or below the display screen 70, communicatively coupled to the processor arrangement 51 through which a user of the portable computing device 50 may operate this device.

The display screen 70 may have any suitable shape such as a rectangular shape, and may be operated in a landscape or portrait mode by the processor arrangement 51 in response to the data provided by the set 60 of orientation sensors, i.e. depending on the orientation of the portable computing device 50 as is well-known per se. The portable computing device 50 preferably is a tablet computer although embodiments of the present invention are not limited to tablet computers only and also cover other types of portable computing devices 50, such as for example personal digital assistants, smart phones, and so on.

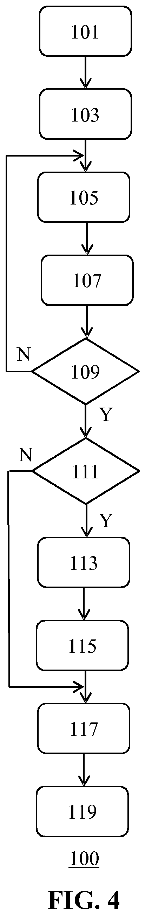

In accordance with embodiments of the present invention, the portable computing device 50 implements a method 100, a flowchart of which is depicted in FIG. 4. In accordance with this method, a user of the portable computing device 50 can select a 2-D image slice 30 of a 3-D image volume 10 in a particular orientation in a highly intuitive manner by manipulating the orientation of the portable computing device 50 as will be explained in further detail below. The method 100 starts in operation 101 in which the portable computing device 50 is enabled, e.g. switched on or woken up from a sleep mode, after which the method 100 proceeds to operation 103 in which the portable computing device 50 receives a 3-D image volume 10 from a remote source such as an 3-D imaging apparatus, a remote data storage arrangement such as a cloud storage arrangement, a network attached storage arrangement, and so on. The received 3-D image volume 10 may include a standardized orientation of the 2-D viewing axis 20, which is used by the processor arrangement 51 to generate a 2-D image slice 30 and control the display screen 70 to display the generated 2-D image slice 30.

In addition, the processor arrangement 51 receives orientation data from the set 60 of orientation sensors, e.g. one or more accelerometers 61, gyroscopes 63 and/or cameras 65, from which the processor arrangement 51 determines the actual orientation of the portable computing device 50 and associates or links this actual orientation to the standardized orientation of the 2-D viewing axis 20 within the received 3-D image volume 10. Alternatively, the processor arrangement 51 may associate the standardized orientation of the 2-D viewing axis 20 with a reference orientation of the portable computing device 50, e.g. a vertical or horizontal orientation, and adjusts the standardized orientation of the 2-D viewing axis 20 within the 3-D image volume 10 in accordance with a deviation of the actual orientation of the portable computing device 50 from its reference orientation before generating the initial 2-D image slice 30 along the 2-D viewing axis 20 to be displayed on the display screen 70.

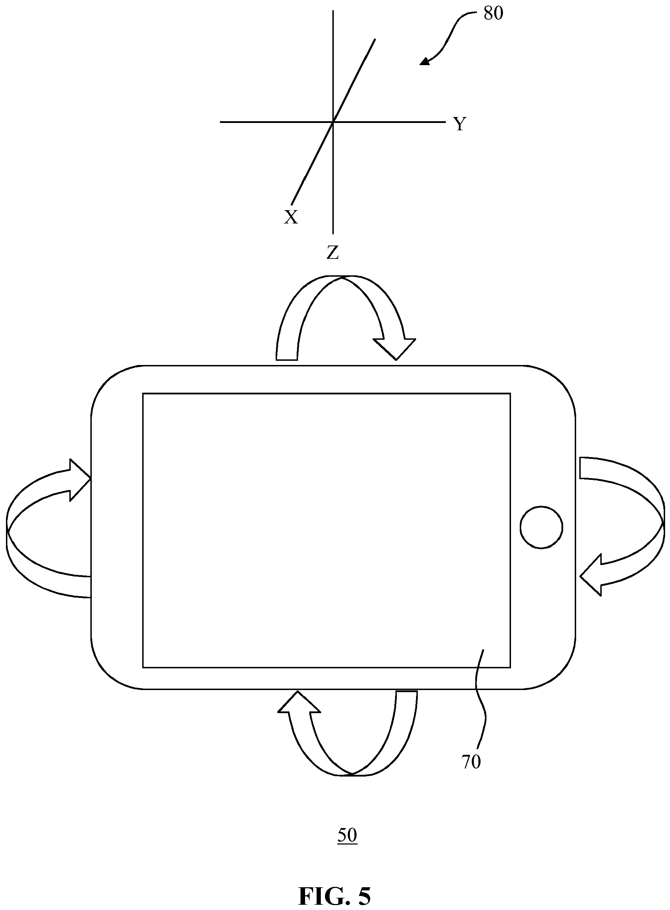

In operation 105, the user may adjust the orientation of the 2-D viewing axis 20 within the received 3-D image volume 10 by rotating the portable computing device 50, e.g. by tilting the portable computing device 50 relative to a reference frame 80 as schematically depicted in FIG.5. This may involve an out-of-plane rotation of the portable computing device 50 out of the YZ plane of the reference frame 80, an out-of-plane rotation of the portable computing device 50 out of the XZ plane of the reference frame 80, an out-of-plane rotation of the portable computing device 50 out of the XY plane of the reference frame 80 or any combination thereof. The reorientation of the portable computing device 50 is detected with the set 60 of orientation sensors, with the processor arrangement 51 receiving the orientation sensor data from the set 60 and calculating the reorientation of the portable computing device 50 accordingly.

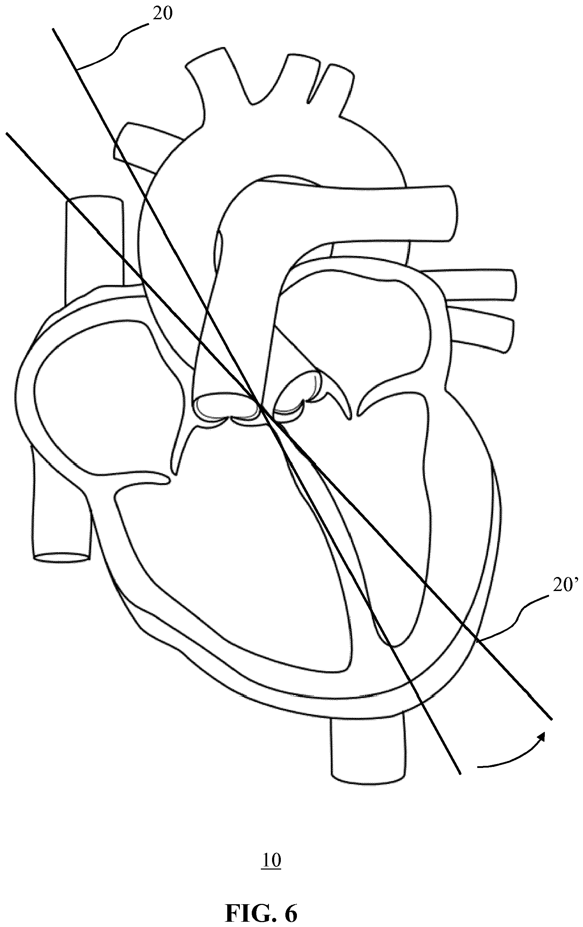

In operation 107, the processor arrangement 51 reorients the 2-D viewing axis 20 within the received 3-D image volume 10 in accordance with the determined reorientation of the portable computing device 50 in operation 105 such that the orientation of the 2-D viewing axis 20 within the received 3-D image volume 10 follows the user-induced reorientation of the portable computing device 50, thereby altering the original orientation of the 2-D viewing axis 20 to an updated orientation within the 3-D image volume 10 schematically depicted as 2-D viewing axis 20' in FIG. 6 and thereby altering the plane of the 2-D image slice 30 along the 2-D viewing axis 20 to be displayed on the display screen 70. In an embodiment, the reorientation of the 2-D viewing axis 20 causes the 2-D image slice 30 displayed on the display screen 70 to be updated accordingly, i.e. an updated 2-D image slice 30 in the altered plane is displayed on the display screen 70 such that the user of the portable computing device 50 can readily assess if the reorientation of the 2-D viewing axis 20 within the 3-D image volume 10 by reorienting the portable computing device 50 as explained above has resulted in the 2-D image slice 30 being displayed in the optimal plane.

This is schematically reflected by operation 109 in which the user can decide if further reorientation of the 2-D viewing axis 20 within the 3-D image volume 10 is required, in which case the user further alters the orientation of the portable computing device 50 as reflected by the method 100 returning to operation 105 or alternatively if the 2-D image slice 30 is displayed in its optimal plane, the user may keep the portable computing device 50 in its actual orientation as reflected by the method 100 proceeding to operation 111.

The above operation mode of the portable computing device 50 maybe referred to as the correction mode of the portable computing device 50 in which the orientation of the 2-D viewing axis 20 within the 3-D image volume 10 is corrected using rotation or tilting of the portable computing device 50. In a particularly advantageous embodiment, once the user has reoriented the 2-D viewing axis 20 in its optimal orientation within the 3-D image volume 10, the user can leave the correction mode, e.g. by instructing the processor arrangement 51 to exit the correction mode through interaction with a user interface of the portable computing device 50. Once the portable computing device has left this correction mode, the orientation of the 2-D viewing axis 20 within the 3-D image volume 10 is locked or frozen such that any further reorientation, i.e. rotation or tilting, of the portable computing device 50 no longer triggers an associated reorientation of the 2-D viewing axis 20 within the 3-D image volume 10. This can aid the user friendliness of the portable computing device 50 as it is rather easy for its user to accidentally rotate or tilt the portable computing device 50 whilst evaluating one or more 2-D image slices 30 along the 2-D viewing axis 20 in its optimal orientation, where reorientation of this viewing axis would be undesirable. Such an operation mode of the portable computing device 50 may be referred to as the evaluation mode of the 3-D image volume 10.

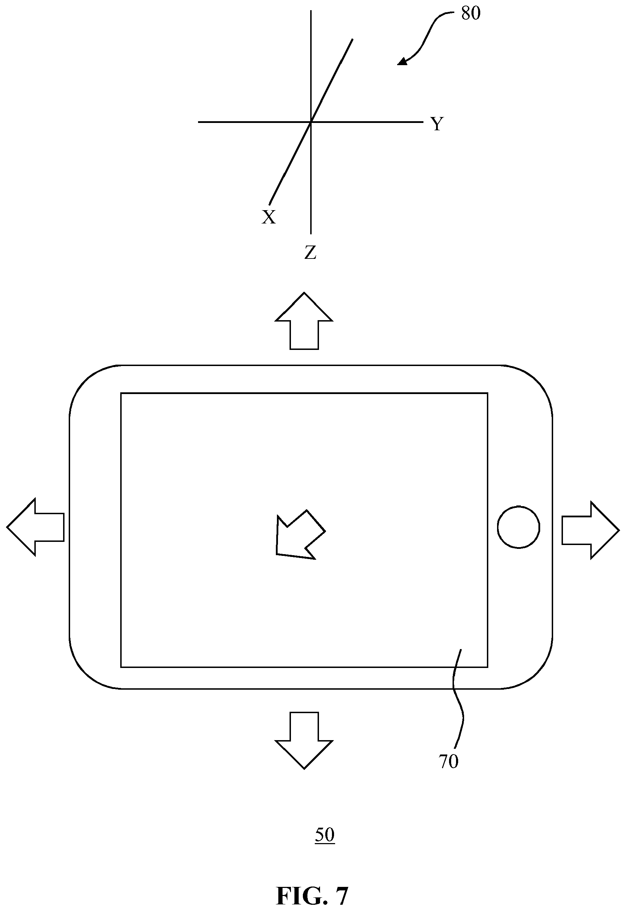

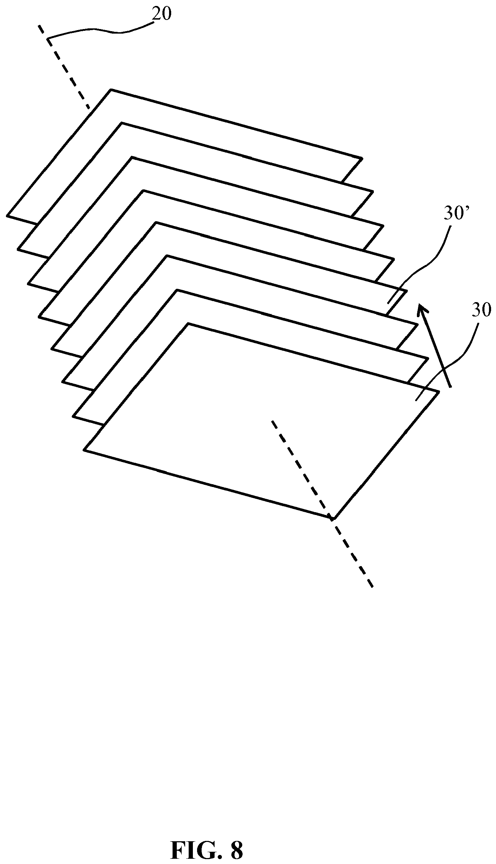

In operation 111, the user of the portable computing device 50 may choose to select another 2-D image slice 30 along the 2-D viewing axis 20 in its actual location, e.g. its locked location, within the 3-D image volume 10. If this is the case, the user may manipulate the orientation of the portable computing device 50 as schematically depicted in FIG. 7 by translating the portable computing device 50 along one or more of the X, Y, Z axes of the reference frame 80. For example, the user may move the portable computing device 50 along the display axis (X-axis) of the display screen 70 or may move the portable computing device 15 normal to the display axis of the display screen 70, e.g. move the portable computing device sideways or upwards or downwards to scroll through the 2-D image slices 30 along the 2-D viewing axis 20 as schematically depicted in FIG. 8, in which such a translation of the portable computing device 50 as detected in operation 113 with the data provided by the set 60 of orientation sensors, e.g. one or more accelerometers 61, gyroscopes 63 and/or cameras 65 causes the processor arrangement 50 to select a further 2-D image slice 30' along the 2-D viewing axis 20 in operation 115.

The amount of user-induced displacement or translation of the portable computing device 50 may be used to control which of the 2-D image slices along the 2-D viewing axis 20 is selected. Alternatively, upon the processor arrangement 51 detecting an amount of translation of the portable computing device from the data provided by the set 60 of orientation sensors exceeding a defined threshold, the next or previous 2-D image slice 30 in a sequence of 2-D image slices 30 along the 2-D viewing axis 20 maybe selected. Whether the next or previous 2-D image slice 30 is selected may be based on the sign or direction of the detected translation of the portable computing device 50 by the processor arrangement 51. In a further embodiment, the portable computing device 50 may be configured to only generate another 2-D image slice 30 along the 2-D viewing axis 20 if the amount of translation of the portable computing device 50 exceeds a defined threshold such as to avoid overactive scrolling between the 2-D image slices 30 along the 2-D viewing axis 20.

In operation 117, the processor arrangement 51 controls the display screen 70 to display the selected 2-D image slice 30 for evaluation by the user of the portable computing device 50 after which the method 100 may revert back to operation 111 in case the user wishes to select further 2-D image slices along the 2-D viewing axis 20 in its actual orientation within the 3-D image volume 10 or alternatively the method 100 may terminate in operation 119.

As will be readily understood by the skilled person, the 2-D image slice that is ultimately selected for display on the display screen 70 may be the actual (i.e. the most up to date) 2-D image slice that is selected in accordance with a detected rotation of the portable computing device 50, the actual (i.e. the most up to date) 2-D image slice that is selected in accordance with a detected translation of the portable computing device 50 or the actual (i.e. the most up to date) 2-D image slice that is selected in accordance with a detected combination of rotation and translation of the portable computing device 50. In other words, the 2-D image slice 30 to be displayed maybe selected by rotation only of the portable computing device 50, e.g. when the view selected by the processor arrangement 51 along the rotated 2-D viewing axis 20' is already the desired 2-D image slice 20. Or the 2-D image slice 30 to be displayed may be selected by translation only of the portable computing device 50, e.g. in case the default or standard orientation of the 2-D viewing axis 20 is already optimal. Notwithstanding, the embodiments of the portable computing device 50 allow a user to alter both the orientation of the 2-D viewing axis 20 and the 2-D image slice 30 along this axis by manipulation of the orientation of the portable computing device 50 as explained in more detail above.

At this point, it is further noted that in a preferred embodiment of the present invention, the portable computing device 50 may be operable in the aforementioned correction and evaluation modes, with the orientation of the 2-D viewing axis 20 being locked in the evaluation mode as previously explained. It is noted for the avoidance of doubt that in the correction mode, the user may also be able to scroll through different 2-D image slices 30 along the 2-D viewing axis 20 in its actual orientation within the 3-D image volume 10 by translating the portable computing device 50 as previously explained. Alternatively, in the correction mode the processor arrangement 51 may be adapted to only change the orientation of the 2-D viewing axis 20 within the 3-D image volume 10 in response to detected rotations of the portable computing device 50, whereas in the evaluation mode the processor arrangement 51 may be adapted to only allow scrolling through 2-D image slices 30 along the 2-D viewing axis 20 in its locked orientation within the 3-D image volume 10 as previously explained.

As a further option, the translation-induced scrolling may be disabled in the evaluation mode and may be replaced by a gesture-based, e.g. touch-based, user interaction with the portable computing device 50, e.g. with its display screen 70, in order to enable such scrolling. This has the advantage that in the evaluation mode the portable computing device 50 may be operated in a more conventional manner, which may be perceived as more user-friendly or intuitive by at least some users.

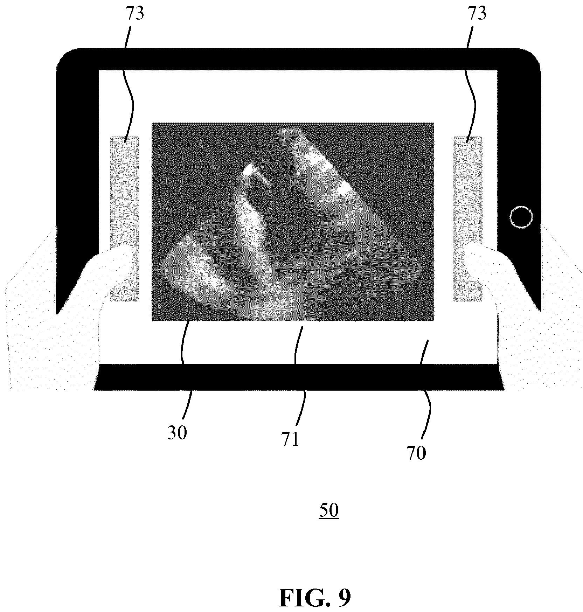

In an embodiment, the display screen 70 is a touch screen display and the processor arrangement 51 is adapted to configure a region of the touchscreen display as a touch-sensitive user interface through which the user can switch or toggle between the correction mode and the evaluation mode of the portable computing device 50. As explained above, such a touch-sensitive user interface maybe further used to scroll through the 2-D image slices 30 along the 2-D viewing axis 20 in the evaluation mode. In an example embodiment schematically depicted in FIG. 9, the display screen 70 has a central region 71 in which the 2-D image slice 30 is displayed and adjacent peripheral regions 73 configured as such a touch-sensitive user interface. The adjacent peripheral regions 73 may be conspicuously displayed on the display screen 70 such that the user of the portable computing device 50 can immediately recognize them as a user interface.

For example, where a pair of such peripheral regions 73 is provided, the user may select the correction mode of the portable computing device 50 by simultaneously contacting or pressing both peripheral regions 73, whilst release of one or more of the peripheral regions 73 causes the processor arrangement 51 to exit the correction mode and enter the evaluation mode in which the orientation of the 2-D viewing axis 20 within the 3-D image volume 10 is locked as previously explained. This provides a particularly intuitive way of selecting the correction and evaluation modes of the portable computing device 50 as the user can reorient the 2-D viewing axis 20 within the 3-D image volume 10 by rotating or tilting the portable computing device 50 whilst at the same time keeping the thumbs of both hands pressed onto the peripheral regions 73 on either side of the displayed 2-D image slice 30 in the central region 71 of the display screen 70. In the evaluation mode, a sliding motion along one or both peripheral regions 73 for example may be used to select a particular 2-D image slice 20 along the locked 2-D viewing axis 20. The sliding direction may be translated into a scrolling direction along the 2-D viewing axis 20 as will be readily understood by the skilled person.

Such a user interface may be further refined in any suitable manner. For example, the peripheral regions 73 may be elongated regions, e.g. extending along opposing edges of the displayed 2-D image slice 30. The user may slide his or her thumbs (or any other finger for that matter) along the peripheral region 73, i.e. in their respective elongation directions, which may be interpreted as a further user instruction. For example, if the user simultaneously slides his or her thumbs in opposite directions over the peripheral regions 73, this may be interpreted by the processor arrangement 51 as an in-plane rotation instruction for the displayed 2-D image slice 30 and the processor arrangement 51 may rotate the displayed 2-D image slice 30 accordingly.

Optionally, once the user has obtained an optimal 2-D image slice 30 by manipulation of the portable computing device 50 as explained above, the user may interact with the user interface of the portable computing device 50, e.g. by pressing a button or the like, which button may be displayed on a touch-sensitive display screen 70 by way of non-limiting example only, which causes the processor arrangement 51 to store the displayed 2-D image slice 30 in a data storage device (not shown). Such a data storage device maybe integral to the portable computing device 50, e.g. a memory, solid state disk, hard disk, etcetera, or alternatively such a data storage device may be a remote data storage device such as a cloud storage device, a network attached storage device, and so on, in which case the processor arrangement 51 controls the output unit 55 to communicate the selected 2-D image slice to the remote data storage device. This allows for a later and/or further evaluation of the selected 2-D image slice 30 at any suitable point in time.

As a further option, the user may instruct the portable computing device 50 through interaction with any suitable user interface thereof to communicate orientation information of the displayed 2-D slice 30 to an imaging apparatus through the output unit 55. This for example may be advantageous in a scenario in which the resolution of the 3-D image volume 10 is lower than the resolution of a 2-D medical image captured with such an imaging apparatus operating in a 2-D imaging mode. In such a scenario, the orientation information of the selected 2-D image slice 30 may be used by the imaging apparatus to regenerate the 2-D image slice 30 of the 3-D image volume 10 in a 2-D imaging mode to yield a higher resolution 2-D image in the desired orientation plane. Such a higher resolution 2-D image may be communicated by the imaging apparatus to the input unit 53 of the portable computing device 50 and processed by the processor arrangement 51 and subsequently displayed on the display screen 70 such that a medical practitioner may retrieve more detailed diagnostically relevant information from the thus obtained higher resolution 2-D image.

The portable computing device 50 according to embodiments of the present invention may be a dedicated portable computing device 50 in which at least some of the operations of the method 100 as described above are realized in hardware within the processor arrangement 51 of the portable computing device 50. Alternatively, the portable computing device 50 may be a generic portable computing device such as a generic tablet computer, e.g. an iPad or the like, in which case the processor arrangement 51 of such a generic portable computing device may be configured to implement the method 100 using a computer program product such as an app or the like.

More generally speaking, the above described embodiments of the method 100 executed by the processor arrangement 51 may be realized by computer readable program instructions embodied on a computer readable storage medium having, when executed on an processor arrangement 51 of a portable computing device 50, cause the processor arrangement 51 to implement any embodiment of the method 100. Any suitable computer readable storage medium may be used for this purpose, such as for example an optically readable medium such as a CD, DVD or Blu-Ray disc, a magnetically readable medium such as a hard disk, an electronic data storage device such as a memory stick or the like, and so on. The computer readable storage medium may be a medium that is accessible over a network such as the Internet, such that the computer readable program instructions may be accessed over the network. For example, the computer readable storage medium may be a network-attached storage device, a storage area network, cloud storage or the like. The computer readable storage medium may be an Internet-accessible service from which the computer readable program instructions may be obtained. In an embodiment, the portable computing device 50 is adapted to retrieve the computer readable program instructions from such a computer readable storage medium and to create a new computer readable storage medium by storing the retrieved computer readable program instructions in a data storage arrangement of the portable computing device 50, e.g. in a memory device or the like forming part of the portable computing device 50.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A portable computing device (50) comprising an input module (53), a display screen (70), a set (60) of orientation sensors and a processor arrangement (51) communicatively coupled to the input module and the set of orientation sensors, wherein the processor arrangement is adapted to:
receive (103) a 3-D image volume (10) from the input module;
determine (105) a 2-D viewing axis (20) within the received 3-D image volume;
receive (107) first data from the set of orientation sensors indicative of a rotation of the portable computing device;
rotate the 2-D viewing axis within the received 3-D image volume in accordance with the indicated rotation of the portable computing device and select a 2-D image slice (30) along said rotated 2-D viewing axis;
receive (113) second data from the set of orientation sensors indicative of a translation of the portable computing device;
select (115) a 2-D image slice (30') from the received 3-D image volume along the 2-D viewing axis or the rotated 2-D viewing axis in accordance with the indicated translation of the portable computing device; and
control (117) the display screen to display the 2-D image slice selected in accordance with the indicated rotation and/or translation of the portable computing device.

2. The portable computing device (50) of claim 1, further comprising a first operating mode in which the processor arrangement (51) is adapted to allow rotation of the 2-D viewing axis (20) and a second operating mode the processor arrangement is adapted to lock the orientation of the 2-D viewing axis.

3. The portable computing device (50) of claim 2, wherein the display screen (70) is touch-sensitive, and wherein at least one region (73) of the display screen defines a user interface region for toggling between the first operating mode and the second operating mode and/or for selecting the 2-D image slice (30) from the received 3-D image volume (10) along the 2-D viewing axis (20) in the second operating mode.

4. The portable computing device (50) of claim 3, wherein the display screen (70) comprises a pair of said user interface regions (73) at opposing edges of the display screen, said pair of user interface regions flanking a central region (71) for displaying the 2-D image slice (20), and wherein the processor arrangement (51) is adapted to select the first operating mode in response to simultaneous engagement of the pair of said user interface regions.

5. The portable computing device (50) of claim 4, wherein the user interface regions (73) are elongated regions, and wherein the processor arrangement (51) is adapted to: rotate the displayed 2-D image slice (30) in accordance with simultaneously detected sliding movements in opposite directions across said elongated regions; and/or
select the 2-D image slice (30) from the received 3-D image volume (10) along the 2-D viewing axis (20) in the second operating mode in accordance with simultaneously detected sliding movements in the same direction across said elongated regions.

6. The portable computing device (50) of any of claims 1-5, wherein the translation of the portable computing device is a translation along or normal to a display axis of the display screen (70).

7. The portable computing device (50) of any of claims 1-6, wherein the set (60) of orientation sensors comprises at least one camera (65).

8. The portable computing device (50) of any of claims 1-7, wherein the processor arrangement (51) is adapted to store the displayed 2-D slice (30) in a data storage device in response to a user command received through a user interface of the portable computing device.

9. The portable computing device (50) of any of claims 1-8, further comprising an output unit (55) communicatively coupled to the processor arrangement (51), wherein the processor arrangement is adapted to control the output unit to communicate orientation information of the displayed 2-D slice (20) to an imaging apparatus in response to a user command received through a user interface of the portable computing device.

10. The portable computing device (50) of any of claims 1-9, wherein the portable computing device is a tablet computer.

11. A computer program product for a portable computing device (50) comprising an input module (53), a display screen (70), a set (60) of orientation sensors (61, 63, 65) and a processor arrangement (51) communicatively coupled to the input module and the set of orientation sensors, the computer program product comprising a computer readable storage medium having computer readable program instructions embodied therewith for, when executed on the processor arrangement, cause the processor arrangement to:
receive (103) a 3-D image volume (10) from the input module;
determine (105) a 2-D viewing axis (20) within the received 3-D image volume;
receive (107) first data from the set of orientation sensors indicative of a rotation of the portable computing device;
rotate the 2-D viewing axis within the received 3-D image volume in accordance with the indicated rotation of the portable computing device and select a 2-D image slice (30) along said rotated 2-D viewing axis;
receive (113) second data from the set of orientation sensors indicative of a translation of the portable computing device;
select (115) a 2-D image slice (30') from the received 3-D image volume along the 2-D viewing axis or the rotated 2-D viewing axis in accordance with the indicated translation of the portable computing device; and
control (117) the display screen to display the 2-D image slice selected in accordance with the indicated rotation and/or translation of the portable computing device.

12. The computer program product of claim 11, further comprising computer readable program instructions that, when executed on the processor arrangement (51), cause the processor arrangement to allow rotation of the 2-D viewing axis (20) in a first operating mode of the portable computing device and to lock the orientation of the 2-D viewing axis in a second operating mode of the portable computing device.

13. The computer program product of claim 12, wherein the display screen (70) comprises a pair of said user interface regions (73) at opposing edges of the display screen (70), said pair of user interface regions flanking a central region (71) for displaying the 2-D image slice (30), and wherein the processor arrangement (51) is adapted to select the first operating mode in response to simultaneous engagement of the pair of said user interface regions.

14. The computer program product of any of claims 11-13, further comprising computer readable program instructions that, when executed on the processor arrangement (51), cause the processor arrangement to store the displayed 2-D slice (30) in a data storage device in response to a user command received through a user interface of the portable computing device.

15. The computer program product of any of claims 11-14, further comprising computer readable program instructions that, when executed on the processor arrangement (51), cause the processor arrangement to control an output unit (55) of the portable computing device to communicate orientation information of the displayed 2-D slice (30) to an imaging apparatus in response to a user command received through a user interface of the portable computing device.
